Europäisches Patentamt

European Patent Office

Office européen des brevets

(11) Veröffentlichungsnummer: **0 237 475 B1**

# EUROPÄISCHE PATENTSCHRIFT

(45) Veröffentlichungstag der Patentschrift: **11.09.91**

(51) Int. Cl.⁵: **A47J 31/40**

(21) Anmeldenummer: **87810090.8**

(22) Anmeldetag: **16.02.87**

(54) Kolben-Zylinder-Aggregat für eine Kaffeemaschine und Verfahren zu ihrem Betrieb.

(30) Priorität: **08.03.86 DE 3607656**

(43) Veröffentlichungstag der Anmeldung:
**16.09.87 Patentblatt 87/38**

(45) Bekanntmachung des Hinweises auf die
Patenterteilung:
**11.09.91 Patentblatt 91/37**

(84) Benannte Vertragsstaaten:
**AT BE CH DE ES FR GB GR IT LI LU NL SE**

(56) Entgegenhaltungen:
EP-A- 0 000 685      EP-A- 0 073 739
WO-A-82/01120      CH-A- 367 301
DE-A- 2 053 466      DE-A- 2 143 206
DE-A- 3 316 157      FR-A- 2 226 137
FR-A- 2 447 173      GB-A- 943 913
US-A- 2 907 266

(73) Patentinhaber: **Cafina AG**
**Römerstrasse 2**
**CH-5502 Hunzenschwil(CH)**

(72) Erfinder: **Meier, Hermann**
**Meisenweg 5**
**CH-5312 Döttingen(CH)**
Erfinder: **Franzolin, Jean-Paul**
**Floreal 40**
**CH-1008 Prilly(CH)**

(74) Vertreter: **Rottmann, Maximilian R.**
**c/o Rottmann, Quehl & Zimmermann AG**
**Glattalstrasse 37**
**CH-8052 Zürich(CH)**

## Beschreibung

Die vorliegende Erfindung bezieht sich auf ein Kolben-Zylinder-Aggregat für eine Maschine zur Zubereitung von Kaffee nach dem Oberbegriff des Anspruchs 1 bzw. 2. Ferner bezieht sich die Erfindung auf ein Verfahren zum Betrieb eines solchen Kolben-Zylinder-Aggregates.

Kaffeemaschinen, die ein ähnliches Kolben-Zylinder-Aggregat verwenden, sind zum Beispiel aus der PCT-WO 82/01120 und der DE-B-20 53 466 bekannt geworden.

Die Anordnung gemäss der PCT-WO 82/01120 sieht dabei zwei in einer Brühkammer gegenläufig und unabhängig voneinander verschiebbare Kolben vor, zwischen denen das aufzubrühende Kaffeepulver aufgenommen ist. Dadurch, dass man das Kaffeepulver in losem Zustand mit Heisswasser überbrüht und aufquellen lässt und anschliessend durch Verschiebung eines der beiden Kolben zusammenpresst, soll erreicht werden, dass einerseits mit einer kleineren Menge von Kaffeepulver ein aromatisch starker Kaffee erhalten wird, und andererseits, dass dank der unabhängig voneinander arbeitenden Arbeitskolben die Kaffeepulvermenge dosiert und damit die Aromastärke bestimmt werden kann. Die Zielsetzung jener Erfindung ist also zum einen darin zu sehen, mit möglichst wenig Kaffeepulver ein aromatisches Kaffeegetränk herzustellen, und zum anderen, die Aromastärke vorwählbar zu gestalten.

Allerdings vermag diese Druckschrift keine Lehre darüber zu geben, wie mit Hilfe der beiden unabhängig voneinander arbeitenden Arbeitskolben die Kaffeepulvermenge dosiert werden kann. Vielmehr erschöpft sich die Offenbarung jener Druckschrift im wesentlichen darin, dass Zwei unabhängig voneinander bewegbare Arbeitskolben zum Schliessen des Brühraumes vorgesehen sind, dass in einer ersten Phase, bei noch lockerem Pulver dieses überbrüht wird, und dass schliesslich durch Verschiebung des einen Kolbens ein Zusammenpressen des überbrühten Pulvers zur Herstellung des erwünschten Getränkes erfolgt.

Wohl mag dadurch eine bessere Ausnutzung des Kaffeepulvers erreicht werden, doch ist als nachteilig zu erwähnen, dass der konstruktive Aufwand durch die zwei unabhängig voneinander zu betätigenden Kolben sehr gross ist und dass der Zyklus zur Herstellung des Getränkes vergleichsweise zeitraubend ist, sodass zur Herstellung eines Kaffees eine längere Zeit verstreicht.

Auch die Konstruktion des Kolben-Zylinder-Aggregates der Kaffeemaschine gemäss der DE-B-20 53 466 sieht zwei Kolben vor. Während der obere Kolben aus dem Brühraum herausziehbar ist, um diesen mit aufzubrühendem Kaffeepulver zu füllen, und im übrigen die Aufgabe hat, den Brühraum zu verschliessen und das eingefüllte Kaffeepulver zusammenzupressen, ist der als unterer Abschluss des Brühraumes vorgesehene, weitere Kolben bezüglich seiner unteren Endlage durch Anschläge verstellbar, offensichtlich um in erster Linie das Volumen der Brühkammer zu variieren, in zweiter Linie aber auch dazu, bei konstantem Volumen des eingefüllten Kaffeepulvers den durch den verschiebbaren Kolben ausgeübten Anpressdruck variabel zu gestalten.

Auch bei dieser Konstruktion ist der konstruktive Aufwand recht hoch und das angestrebte Ziel lässt sich nur unvollkommen erreichen, da der Anpressdruck des Kolbens auf die Kaffeepulvermenge im Brühraum bzw. dessen Volumen nur grob eingestellt werden kann.

Ferner ist aus der DE-A-3 316 517 eine Kaffeemaschine der gattungsgemässen Art bekannt, bei welcher der Kolben durch einen elektrischen Stellmotor in die Brühkammer hineinbewegt wird. Die genaue Endstellung des Kolbens wird dabei vom Gegendruck bestimmt, der beim Komprimieren des Kaffeemehls auftritt; dieser Gegendruck wird indirekt aus der Stromaufnahme des Stellmotors abgeleitet. Diese bekannte Anordnung weist also kein Druckmessorgan zur unmittelbaren Ermittlung des auf den Kolben wirkenden Gegendrucks aus. Zudem ist die Messung des Gegendrucks über die Stromaufnahme sehr ungenau, da die Stromkennlinie des Elektromotors im Blockierungsbereich sehr steil verläuft.

Schliesslich ist in der EP-A-0 000 685 im allgemeinen Sinn eine Vorrichtung zur Herstellung von Espresso-Kaffee oder ähnlichen Getränken beschrieben, mit einer Brühkammer, die einseitig verschliessbar ist und deren Volumen durch einen verschiebbaren Kolben verkleinert werden kann, um einen Anpressdruck auf das Kaffeepulver zu erzeugen. In dieser Druckschrift sind keine Hinweise auf einen Elektro- oder Schrittmotor zum Antrieb des Kolbens oder auf eine nahezu stufenlose Verstellbarkeit des Kolbens vorhanden.

Der Erfindung liegt die Aufgabe zugrunde, ein Kolben-Zylinder-Aggregat für eine Kaffeemaschine der eingangs erwähnten Art so weiterzubilden, dass bei geringem konstruktivem Aufwand eine praktisch stufenlose Einstellung des Brühraum-Volumens und/oder des auf den Kaffeepulver-Vorrat ausgeübten Anpressdruckes und somit der gewünschten Kaffeegetränk-Menge bzw. der Kaffeegetränk-Stärke erfolgen kann, dies bei optimaler Ausnutzung des aufzubrühenden Kaffeepulvers.

Gemäss der vorliegenden Erfindung kann dies bei einem Kolben-Zylinder-Aggregat für eine Kaffeemaschine der eingangs erwähnten Art auf zwei Arten erreicht werden: Zum einen dadurch, dass zum Antrieb des in den zylindrischen Hohlraum hineinbewegbaren und herausziehbaren Kolbens ein Elektromotor vorgesehen ist, der mit einem Steuerorgan in Wirkungsverbindung steht, an welches ein Druckmessorgan zur unmittelbaren Ermittlung des auf den Kolben wirkenden Gegendruckes angeschlossen ist, und zum anderen dadurch, dass zum Antrieb des in den zylindrischen Hohlraum hineinbewegbaren und herausziehbaren Kolbens ein elektrischer Schrittmotor vorgesehen ist, der mit einem Steuerorgan in Wirkungsverbindung steht.

In beiden Fällen ist der Brühraum einerends fest verschlossen, während der andernends einfahrbare Kolben, unter Einfluss des Steuergerätes, in genau vorbestimmbarem Mass in die Brühkammer eingeführt werden kann. Somit lässt sich nicht nur das zur Verfügung stehende bzw. benötigte Volumen, abhängig von der vorgängig eingefüllten Menge an Kaffeepulver, genau festlegen, sondern auch der auf das Kaffeepulver in der Brühkammer ausgeübte Anpressdruck, indem der Kolben mehr oder weniger in den Brühraum eingefahren wird, sei es dadurch, dass der Vorschub des Kolbens in die Brühkammer hinein durch Abschalten des dafür vorgesehenen Antriebsmotors dann unterbrochen wird, wenn ein voreinstellbarer Gegendruck durch das in der Brühkammer befindliche Kaffeepulver ausgeübt wird, sei es dadurch, dass die vorgewählte Anzahl der Schritte des Antriebsmotors, die der Menge und/oder dem auf das Kaffeepulvers auszuübenden Druck entspricht, erreicht ist.

Weiterbildungen des erfindungsgemässen Kolben-Zylinder-Aggregates sowie bevorzugte Ausführungsarten desselben sind in den abhängigen Ansprüchen 3 bis 9 umschrieben.

Im weiteren gibt die Erfindung ein Verfahren zum Betrieb eines derartigen Kolben-Zylinder-Aggregates an. Bei diesem Verfahren wird der Kolben in bekannter Weise zur Freigabe der Brühkammer zurückgezogen, dann wird Kaffeepulver in die Brühkammer eingefüllt und der Kolben wird wieder in die Brühkammer hineinbewegt. Gemäss der Erfindung zeichnet sich das Verfahren dadurch aus, dass der Vorschub des Kolbens in die Brühkammer hinein in Abhängigkeit von der Menge des eingefüllten Kaffeepulvers und in Abhängigkeit von der gewünschten Getränkequalität erfolgt. Dies kann wiederum einerseits dadurch erfolgen, dass das Antrieb des Kolbens in die Brühkammer hinein dann unterbrochen wird, wenn der gewünschte, voreinstellbare Gegendruck erreicht ist, oder dadurch, dass der Schrittmotor dann abgestellt wird, wenn die voreingestellte Anzahl Schritte, die der gewünschten Kaffeemenge und Kaffeequalität entspricht, erreicht ist.

Damit lassen sich die Betriebsbedingungen in der Brühkammer optimal an die verwendete Kaffeepulversorte, an die erwünschte Aromastärke und an die aufzubrühende Menge an Kaffeegetränk anpassen, bei gleichzeitiger, bestmöglicher Ausnutzung der in die Brühkammer eingefüllten Kaffeepulvermenge.

Um ein zuverlässiges, das Aggregat schonendes Arbeiten zu fördern, empfiehlt es sich, dass der Kolben, nach erfolgtem Aufbrühen, vor der Verschwenkung des Schliessgliedes in seine Offenstellung, um einen geringen Betrag zurückgezogen wird, um das Schliessglied zu entlasten.

Um ein weitgehend selbstätiges Arbeiten des Aggregates zu ermöglichen, ist nach einem weiteren Gedanken der Erfindung vorgesehen, dass der Kolben, nach Oeffnung des Schliessgliedes, in seine in die Brühkammer hineingefahrene Endstellung bewegt wird, um den Kaffeepulverkuchen aus der Kammer herauszustossen, wobei der Kaffeepulverkuchen durch das Schliessglied, während seiner Bewegung in die Verschlusstellung, abgestreift wird.

Im folgenden wird ein Ausführungsbeispiel des Erfindungsgegenstandes, anhand der beiliegenden Zeichnungen, näher erläutert. Dieses Ausführunsbeispiel bezieht sich spezifisch auf diejenige Ausführung, wo ein Schrittmotor zum Antrieb des Kolbens verwendet wird. Die nachfolgenden Erläuterungen sind aber weitestgehend auch auf die Ausführung mit einem normalen Elektromotor zutreffend, der über ein Steuergerät unter Einfluss eines Druckmessorganes betätigt wird. Im einzelnen zeigen:

Fig. 1    eine teilweise aufgeschnittene, schematische Seitenansicht eines Kolben-Zylinder-Aggregates gemäss der Erfindung in einer ersten Phase,

Fig. 2    eine teilweise aufgeschnittene, schematische Seitenansicht eines Kolben-Zylinder-Aggregates gemäss der Erfindung in einer zweiten Phase,

Fig. 3    eine teilweise aufgeschnittene, schematische Seitenansicht eines Kolben-Zylinder-Aggregates gemäss der Erfindung in einer dritten Phase,

Fig. 4    eine teilweise aufgeschnittene, schematische Seitenansicht eines Kolben-Zylinder-Aggregates gemäss der Erfindung in einer vierten Phase,

Fig. 5    eine schematische Ansicht des vom Aggregat gelösten plattenartigen Schliessgliedes von oben, und

Fig. 6    einen Schnitt durch das Schliessglied gemäss der Linie A-A in Fig. 5.

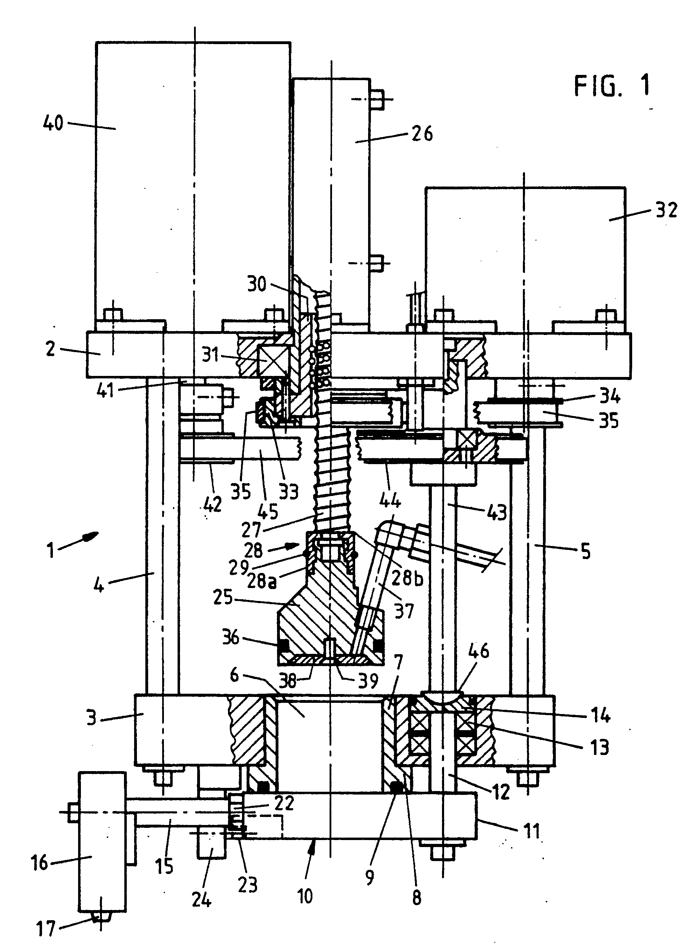

In den Fig. 1 bis 4 ist ein Ausführungsbeispiel des erfindungsgemässen Kolben-Zylinder-Aggregates 1 in einer schematischen, teilweise aufgeschnittenen Seitenansicht in vier verschiedenen, charakteristischen Phasen während seines Betriebs dargestellt. Auf die einzelnen Phasen des Betriebs wird später noch näher eingegangen werden; zunächst soll der konstruktive Aufbau näher erläutert werden.

Das Kolben-Zylinder-Aggregat 1 besitzt eine erste, obere Grundplatte 2 und eine zweite, untere Grundplatte 3, die mittels einer Anzahl von Verbindungsstangen 4, 5 im Abstand und parallel zueinander fest miteinander verbunden sind. Die zweite, untere Grundplatte 3 nimmt einen zylindrischen Hohlraum 6 auf, der als Brühkammer dient. Im Beispielsfall ist die Brühkammer durch das Innere einer in die zweite Grundplatte 3 eingelassenen, hohlzylindrischen Hülse 7 gebildet, die z.B. aus rostfreiem Stahl bestehen kann. Während die Hülse 7 oben bündig mit der Oberfläche der zweiten Grundplatte 3 abschliesst, besitzt sie andernends einen im Durchmesser vergrösserten Flansch 8, der über die untere Oberfläche der zweiten Grundplatte 3 hervorsteht. In die freie Stirnfläche des Flansches 8 ist eine Ringnut eingelassen, in die eine Ringdichtung 9, z.B. aus Kautschuk oder Kunststoff, eingelegt ist.

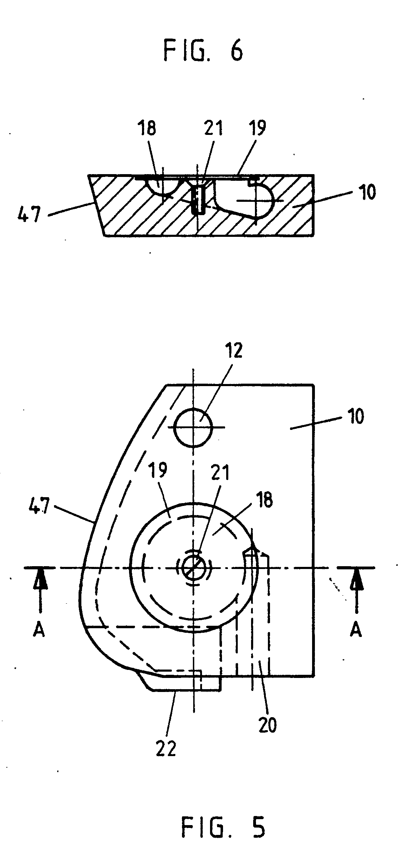

Ferner ist an der zweiten Grundplatte 3 ein generell mit 10 bezeichnetes Schliessglied gelagert, welches im wesentlichen plattenförmige Gestalt besitzt und im Zusammenhang mit den Fig. 5 und 6 noch näher erläutert werden wird. Das Schliessglied 10 besitzt eine exzentrisch, d.h. nahe seines Randes 11 angeordnete, senkrecht gegen oben abstehende Welle 12, deren freies Ende in einer Lageranordnung 13 aufgenommen ist. Die Lageranordnung 13, die z.B. zwei Kugellager umfassen kann, ist in einer Ausnehmung 14 in der zweiten Grundplatte 3 vorgesehen. Die Ausnehmung 14 liegt neben der Hülse 7, wobei die Mittelachse der Ausnehmung 14 und damit die Drehachse der Lageranordnung 13 parallel zur Mittelachse der zylindrichen Hülse 7 verläuft. Die Anordnung ist ferner so getroffen, dass die obere Fläche des Schliessgliedes 10 auf der freien Stirnfläche des Flansches 8 der Hülse 7 aufliegt. Wenn das Schliessglied 10 in der in Fig. 1 gezeigten Verschlußstellung ist, wird die Brühkammer 6 von unten her verschloßen, wobei die Ringdichtung 9 für einen druckdichten Verschluss der Brühkammer 6 sorgt.

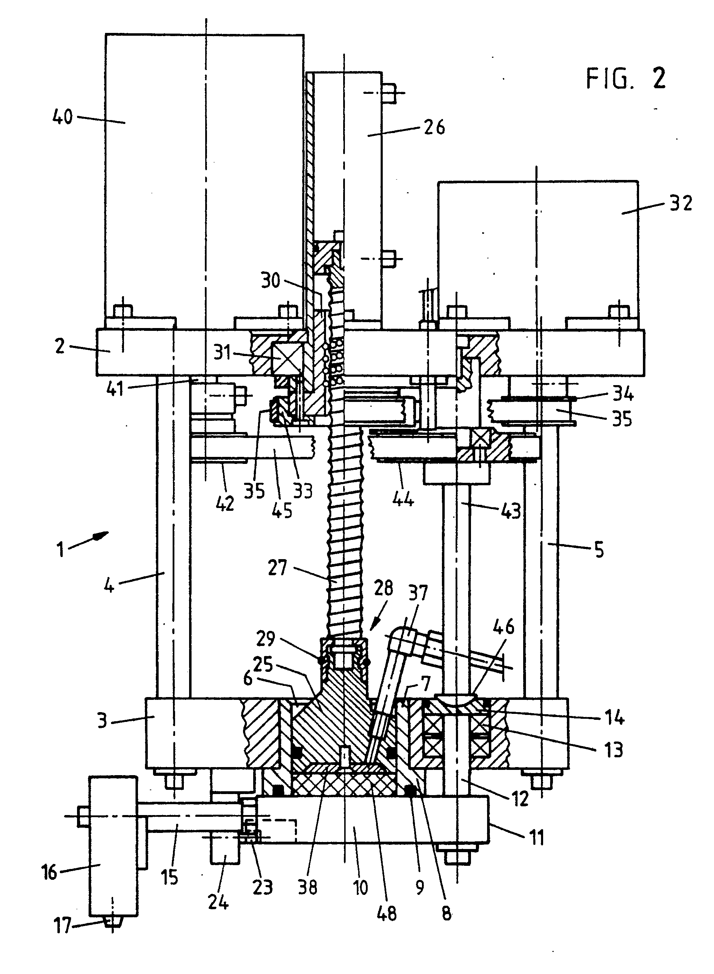

An der der Welle 12 gegenüberliegenden Seite des Schliessgliedes 10 ist über ein Verbindungsrohr 15 ein Getränkeauslasskopf 16 angeschlossen, der zwei Auslassmündungen 17 besitzt. Diese sind über interne Kanäle (nicht gezeigt) an einen an der Oberseite des Schliessgliedes 10 angeordneten, gegen oben offenen Ringkanal 18 angeschlossen, der durch ein Microsieb 19 bedeckt ist (Fig. 5 und 6). Die Verbindung zwischen Rohr 15 und Ringkanal 18 erfolgt durch einen im Inneren des Schliessgliedes angeordneten, tangential in den Ringkanal 18 mündenden und gegen aussen führenden Kanal 20. Das Microsieb 19 ist zweckmässigerweise leicht wegnehmbar, z.B. mittels einer Schraube 21, am Schliessglied 10 befestigt, dass Zentrum des Ringkanals 18 mit der Mittelachse der Brühkammer 6 zusammenfällt, wenn das Schliessglied in seiner Verschlußstellung gemäss Fig. 1 und 2 ist.

Ferner sind an der zweiten Grundplatte 3 und dem Schliessglied 10 Arretiermittel vorgesehen sind, die das Schliessglied 10, wenn es in seiner Verschlußstellung ist, gegen Verschiebung in Richtung der Mittelachse der Brühkammer 6 sichern. Im Beispielsfall umfassen diese Arretiermittel (vgl. Fig.5 und Fig.3 bzw.4) einerseits einen vom Schliessglied radial abstehenden Steg 22, der bezüglich dem Zentrum des Ringkanals 18 diametral der Lagerung der Welle 12 gegenüberliegt. Dieser Stegg 22 arbeitet mit einem Vorsprung 23 zusammen, der an einem von der Unterseite der zweiten Grundplatte 3 abstehenden Steg 24 angebracht ist, in der Weise, dass beim Verschwenken des Schliessgliedes 10 um die Welle 12 in die Verschlußstellung die Unterseite des Steges 22 die Oberseite des Vorsprungs 23 übergreift. Zweckmässigerweise können die Unterseite des Steges 22 und/oder die Oberseite des Vorsprungs 23 etwas geneigt ausgebildet sein, um während des letzten Abschnitts der Schwenkbewegung des Schliessgliedes 10 ein Anpressen desselben an die Unterseite der Hülse 7 und damit an die Ringdichtung 9 zu bewirken, um einen dichten Verschluss der Brühkammer 6 zu gewährleisten.

An der ersten, oberen Grundplatte 2 ist ein Kolben 25 höhenverstellbar gelagert. Zu diesem Zwecke trägt die Oberseite der ersten Grundplatte 2 ein Führungs- und Lagerorgan 26 für eine Kugelspindel 27, die an ihrem unteren, freien Ende den Kolben 25 aufnimmt. Die Verbindung zwischen der Kugelspindel 27 und dem Kolben 25 erfolgt mit Hilfe eines lösbaren Kupplungselementes 28, das zwei im wesentlichen halbzylindrische Kupplungsschalen 28a und 28b umfasst. Diese übergreifen nicht näher bezeichnete Ringwulste bzw. Ringnuten am Ende der Kugelspindel 27 bzw. am oberen Ende des Kolbens 25 mit korrespondierend ausgebildeten Ringnuten bzw. Ringwulsten, sodass eine formschlüssige Verbindung zwischen Kolben 25 und Spindel 27 gegeben ist. Für den Zusammenhalt der beiden Schalenhälften 28a und 28b sorgt ein elastisches Klemmorgan, z.B. ein Gummiring 29.

Die Höhenverstellung der Spindel 27 und damit des Kolbens 25 erfolgt über eine in der ersten Grundplatte 2 drehbar aber höhenfixiert gelagerte Kugelmutter 20, z.B. mittels eines Lagers 31. Die Konstruktion eines solchen Kugelspindelantriebs darf als bekannt vorausgesetzt werden und braucht hier nicht im einzelnen erläutert zu werden. Wesentlich ist, dass bei einer Rotation der Kugelmutter 30 eine weitestgehend reibungs- und spielfreie translatorische Verschiebung der Spindel 27 entlang deren Achse erfolgt.

Der Antrieb der Kugelmutter 30 erfolgt mit Hilfe eines Schrittmotors 32, der ebenfalls auf der ersten, oberen Grundplatte 2 gelagert ist. Zu diesem Zwecke ist die Kugelmutter 30 mit einem drehfest angebrachten, über die Unterseite der ersten Grundplatte 2 hervorstehenden Pulley 33 und der Schrittmotor 32 mit einem ebenfalls über die Unterseite der ersten Grundplatte 2 hervorstehenden Pulley 34 versehen. Die beiden Pulleys 33 und 34 sind mit einem Zahnriemen 35 miteinander verbunden, der eine weitgehend spiel- und schlupffreie Übertragung des Drehmomentes vom Schrittmotor 32 auf die Kugelmutter 30 gewährleistet.

Die Lagerung des Kolbens 25 ist so gewählt, dass dessen Längsmittelachse mit der Längsmittelachse der Brühkammer 6 zusammenfällt. Eine Betätigung des Schrittmotors 32, ausgehend von der in Fig. 1 gezeigten Lage des Kolbens, in der korrekten Drehrichtung wird also bewirken, dass sich der Kolben 25 zur Brühkammer 6 hin absenkt und schliesslich in diese eintritt. Der Aussendurchmesser des Kolbens 25 entspricht dabei, mit geringem Spiel, dem Innendurchmesser der Brühkammer 6, wobei zur Abdichtung zusätzlich ein Ringdichtelement 36 vorgesehen ist, das in einer um die Mantelfläche des Kolbens 25 verlaufenden Ringnut aufgenommen ist. Ferner besitzt der Kolben einen Brühwasseranschluss 37, der an eine nicht dargestellte Heisswasserquelle angeschlossen ist. Der Brühwasseranschluss 37 mündet im Inneren des Kolbens in ein stirnseitig angebrachtes Verteilorgan 38, welches für einen über die Stirnfläche des Kolbens 25 gleichmässig verteilten Brühwasseraustritt sorgt. Das Verteilorgan 38 ist zweckmässigerweise leicht lösbar, z.B. mittels einer Schraube 39, am Kolben 25 befestigt, um eine Reinigung zu vereinfachen.

Zur Verschwenkung des Schliessorganes 10 ist ein weiterer Schrittmotor 40 vorgesehen, der ebenfalls auf der ersten Grundplatte 2 angeordnet ist. Die Abtriebswelle 41 des Schrittmotors 40 erstreckt sich durch eine Öffnung in der Grundplatte 2 gegen unten und trägt ein endseitig angebrachtes Pulley 42. Ferner ist an der ersten Grundplatte 2 eine Antriebswelle 43 gelagert, die koaxial mit der Welle 12 des Schliessgliedes 10 angeordnet ist und die ein Pulley 44 trägt, wobei das Pulley 42 des Schrittmotors 40 über einen Zahnriemen 45 mit dem Pulley 44 weitgehend spiel- und schlupffrei gekoppelt ist. Das untere Ende der Antriebswelle 43 ist mittels einer Kupplung 46 mit der drehbar gelagerten Welle 12 des Schliessgliedes 10 gekoppelt, um letzteres durch Betätigung des Schrittmotors 40 verschwenken zu können.

Die beiden Schrittmotoren 32 und 40 sind an ein nicht dargestelltes Steuergerät an sich bekannter Bauart angeschlossen. Zweckmässigerweise kann dieses Steuergerät auch noch weitere Funktionen innerhalb der Kaffeemaschine übernehmen, z.B. Steuerung der Aufbereitung des Brühwassers, Temperaturkontrolle desselben, Steuerung einer Pumpe zur Förderung des Brühwassers in den Brühraum, Steuerung einer Kaffeemühle zur Aufbereitung des Kaffeepulvers, Steuerung der Förderung des gemahlenen Kaffeepulvers in die Brühkammer und dgl. Die Ausbildung des Steuergerätes bildet nicht Gegenstand der Erfindung; die zweckmässige Auswahl und Programmierung desselben liegt vielmehr im Ermessen des mit der Materie vertrauten Fachmannes und braucht deshalb an dieser Stelle nicht weiter erklärt zu werden.

Das Schliessglied 10 besitzt, wie aus den Fig. 5 und 6 ersichtlich ist, eine abgeschrägte Kante 47, die bei ausgeschwenktem Schliessglied 10 gegen die untere Öffnung der Brühkammer 6 gerichtet ist. Wie im folgenden noch näher erläutert werden wird, dient diese Kante 47 dazu, den vom Kolben 25 ausgestossenen Kaffeepulverkuchen 48a abzustreifen, währenddem das Schliessglied 10 in seine Verschlußstellung zurückgeschwenkt wird.

Die Betriebsweise des in den Zeichnungen als Ausführungsbeispiel dargestellten, erfindungsgemässen Kolben-Zylinder-Aggregates innerhalb einer Kaffeemaschine ist wie folgt:

1.Phase

Das Kolben-Zylinder-Aggregat befindet sich in seiner Ausgangsstellung am Anfang eines Kaffeezubereitungs-Zyklus. Die Brühkammer 6 ist leer, das Schliessglied 10 ist in seiner eingeschwenkten Verschlußstellung, wo es die Brühkammer 6 unten verschliesst und der Kolben 25 befindet sich in seiner oberen Endstellung. Nun wird, durch ein an sich bekanntes, nicht dargestelltes Dosier- und Förderorgan Kaffeepulver in die Brühkammer 6 eingefüllt. Je nachdem, welche Art von Getränk gewünscht wird, sei es in Bezug auf Aromastärke (normaler Kaffee, Expresso, Ristretto), sei es in Bezug auf die Menge (eine kleine/grosse Tasse, zwei kleine/grosse Tassen) wird die erforderliche Menge an Kaffeepulver dosiert, dies, wie schon erwähnt, unter Einfluss des gemeinsamen Steuerorgans. Anschliessend wird der Kolben 25 gegen unten in die Brühkammer 6 hinein verschoben.

2. Phase

Der Kolben 25 ist gegen unten bewegt worden und presst den in die Brühkammer 6 eingefüllten Kaffeepulver-Vorrat 48 mit einem vorbestimmten Druck zusammen. Der Vorschubweg des Kolbens 25 wird dabei durch das Steuergerät in Abhängigkeit des vorgewählten Programms bestimmt, und zwar durch die Anzahl der Schritte, die der Schrittmotor 32 ausführt. Infolge der linearen Charakteristik des Kugelspindelantriebs entspricht ein Schritt des Motors 32 einem genau definierten Vorschubweg des Kolbens 25. Nun wird von der nicht dargestellten Heisswasserquelle über eine ebenfalls nicht dargestellte Pumpe Brühwasser durch den Brühwasseranschluss 37 in das Innere des Kolbens 25 und zum Verteilorgan 38 geleitet. Von dort durchdringt es das Kaffeepulver 48, brüht dieses auf und das fertige Getränk gelangt durch das Microsieb 19 in den Ringkanal 18, von dort in den tangentialen Kanal 20 und schliesslich über das Rohr 15 und den Auslasskopf 16 in eine oder zwei unter die Auslassöffnungen 17 gestellte Tassen. Das Schliessglied 10 ist dabei durch die Arretiermittel 22 und 23 gegen axiale Verschiebung gesichert. Die nachfolgende Tabelle illustriert anhand eines beispielsweisen 6-Stufen-Programms die Zusammenhänge:

|  | 1 Exp. | 2 Exp. | 1 CC | 2 CC | 1 MC | 2 MC |
|---|---|---|---|---|---|---|
| Kaffepulver (gr.) | 9 | 16 | 8 | 14 | 7 | 12 |
| Anzahl Schritte | 1556 | 1400 | 1578 | 1444 | 1600 | 1488 |
| Anpressdruck (kp) | 80 | 50 | 60 | 30 | 50 | 25 |
| Wassermenge ($cm^3$) | 70 | 140 | 150 | 300 | 120 | 240 |
| Auslaufzeit (sec.) | 15 | 25 | 20 | 30 | 15 | 25 |

In der obigen Tabelle bedeuten:

| | |
|---|---|
| 1 Exp. | 1 Tasse Expresso |
| 2 Exp. | 2 Tassen Expresso |
| 1 CC | 1 Tasse Caffee Crème |
| 2 CC | 2 Tassen Caffee Crème |
| 1 MC | 1 Tasse Milchkaffee |
| 2 MC | 2 Tassen Milchkaffee |
| Anzahl Schritte | Einschalt-Intervall des Schrittmotors, ausgehend von der oberen Endlage des Kolbens. |

Man sieht aus der Tabelle, dass den unterschiedlichen Getränkearten jeweils eine ganz spezifische Gruppe von Steuerparametern zugeordnet ist, die im Steuergerät programmiert werden können. Dadurch lässt sich auf einfache Weise, bei optimaler Ausnutzung des Kaffeepulvers, ein wohlschmeckendes Getränk herstellen.

Durch die Verwendung eines Schrittmotors für den Vorschub des Kolbens 25 in den Brühraum 6 hinein lässt sich insbesondere auf einfache Weise der optimale Anpressdruck des Kolbens 25 auf den Kaffeepulver-Kuchen 48 einstellen.

## 3. Phase

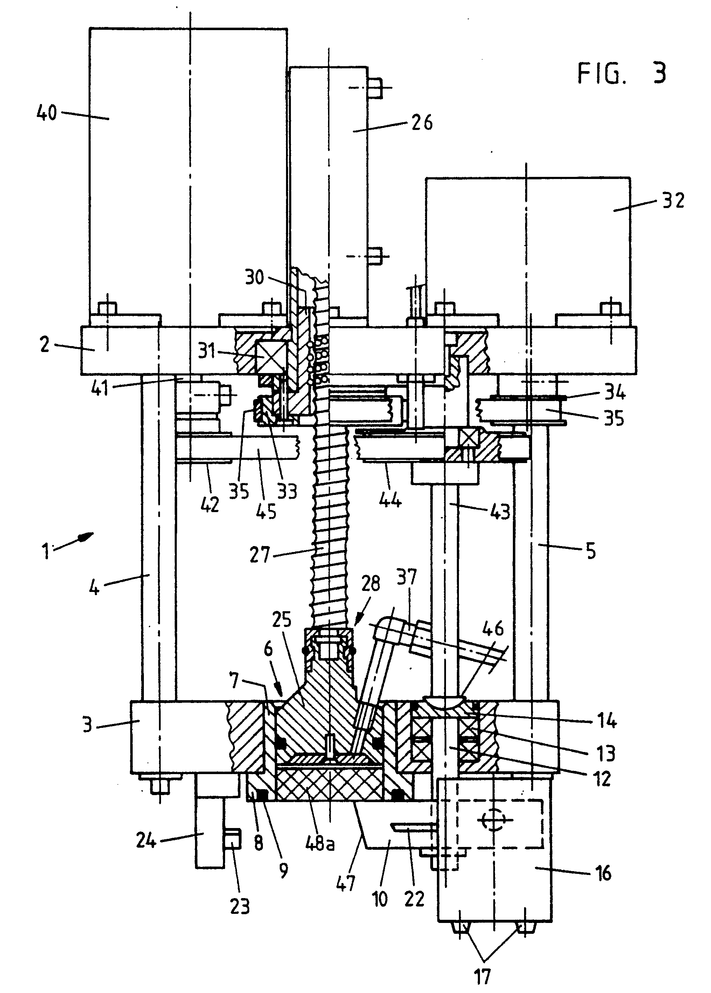

Nachdem das Kaffeegetränk aus den Auslässen 17 ausgetreten ist, wird zunächst der Kolben 25 durch Betätigung des Schrittmotors 32 in umgekehrter Drehrichtung etwas angehoben, um den Kaffeepulverkuchen 48a und damit das Schliessglied 10 von jeglichem Anpressdruck zu entlasten. Danach wird der Schrittmotor 40 unter Einfluss des Steuergerätes betätigt, um das Schliessglied in seine Offenstellung zu verschwenken. Die untere Öffnung der Brühkammer 6 ist dadurch frei. Diese Situation ist in Fig. 3 dargestellt. Der Kaffeepulverkuchen 48a wird infolge des zuvor auf ihn ausgeübten Druckes noch an den Wänden der Brühkammer 6 kleben, also nicht von selbst hinausfallen.

## 4. Phase

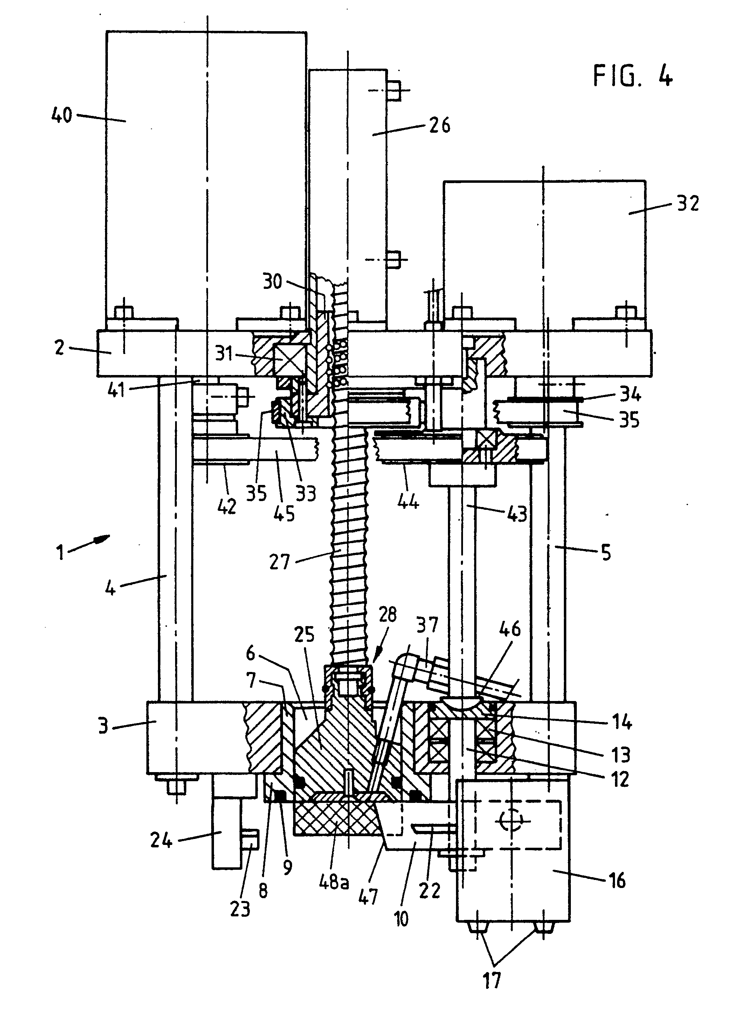

Anschliessend wird der Kolben 25, bei geöffnetem Schliessglied 10, durch Betätigung des Schrittmotors 32 weiter nach unten in die Brühkammer 6 hinein bewegt. Dadurch wird der Kaffeepulverkuchen 48a aus der Brühkammer 6 herausgestossen. Diese Situation ist in Fig. 4 dargestellt. Nun wird das Schliessglied 10, durch Betätigung des Schrittmotors 40, wieder in seine Verschlußstellung zurückgeschwenkt, wobei der Kaffeepulverkuchen 48a durch die Kante 47 abgestreift wird, sodass er in einen (nicht dargestellten)

EP 0 237 475 B1

Auffangbehälter fällt. Gleichzeitig wird der Kolben 25 durch Betätigung des Schrittmotors 32 wieder in seine obere Ausgangslage verschoben; die Situation wie in Fig. 1 dargestellt ist wieder erreicht und der gesamte Zyklus kann von neuem ablaufen.

Der Einfachheit halber und um des besseren Verständnisses Willen wurden die vier Phasen des Betriebs vorstehend in ihrer, wie man glauben würde, eigentlich logischen Ablauffolge erläutert. In der Praxis jedoch ist es vorteilhaft, nach dem Aufbrühen des Kaffeepulvers die Brühkammer verschlossen zu halten, und zwar solange, bis der nächste Kaffee zubereitet werden soll. Dies bedeutet, dass der Funktionsablauf, gemäss der vorstehenden Numerierung, nach der 2.Phase angehalten wird; erst wenn von neuem ein Getränk zubereitet werden soll, laufen die Phasen 3. und 4. und danach die Phasen 1. und 2. ab. Damit wird erreicht, dass eventuell in der Brühkammer nach dem Ausstossen des Kaffeepulverkuchens verbleibende Kaffeepulverreste nicht oxydieren und dadurch den Geschmack des nachfolgenden Getränkes beeinträchtigen können, weil das ausgelaugte Kaffeepulver in der Brühkammer praktisch unter Luftabschluss gehalten wird, bis das nächste Getränk zubereitet werden soll.

Wie bereits erwähnt erlaubt die Verschiebung des Kolbens 25 durch Schrittmotorantrieb eine äusserst feine, zudem genau vorauseinstellbare Positionierung des Kolbens in der Brühkammer. Damit werden optimale Verhältnisse für das Aufbrühen der jeweils in die Brühkammer eingefüllten Menge an Kaffeepulver geschaffen. Da es ohnehin sinnvoll bzw. gar unumgänglich ist, bei einer automatisch arbeitenden Kaffeemaschine ein Steuergerät zu verwenden, bedeutet die Anwendung von Schrittmotoren für den Kolbenvorschub und für die Verschwenkung des Schliessgliedes schlussendlich eine bedeutende konstruktive Vereinfachung, da diese bekanntermassen sehr einfach und mit reproduzierbarer Präzision in gewünschtem Masse gesteuert werden können. Daraus resultiert, dass einerseits der Anpressdruck auf den Kaffeepulverkuchen, abhängig von der Getränkequalität und der Getränkemenge, im erwünschten Grad voreinstellbar ist, und andererseits, dass die Verschwenkung des Schliessgliedes schnell und präzise in seine beiden Endstellungen erfolgt, ohne dass Anschläge, Rutschkupplungen oder dgl. erforderlich wären.

Entsprechendes gilt, wenn an Stelle des Schrittmotors 32 ein normaler Elektromotor verwendet wird. Um das erfindungsgemäss gesteckte Ziel zu erreichen, ist dabei ein Druckfühler vorgesehen, der z.B. in die Spindel eingebaut sein kann und so den auf den Kolben 25 wirkenden Gegendruck misst. Anstatt dass nun, wie vorstehend erläutert, der Schrittmotor 32 je nach gewünschter Kaffeemenge oder Getränkequalität um ein genau vorbestimmtes, programmiertes Mass in die Brühkammer hineinfährt, wird der Kolben durch den Elektromotor in die Brühkammer hinein verschoben, wobei laufend der Gegendruck auf den Kolben bestimmt wird.

Einer gewünschten Kaffeequalität entspricht ein präzise vorausbestimmbarer, am Steuergerät einstellbarer Gegendruck. Sobald dieser erreicht worden ist, wird der Vortrieb des Kolbens durch Abschalten des Antriebsmotors unterbrochen. Diese Ausführung bietet insbesondere bei schwankender oder ungenauer Dosierung des Kaffeepulvers in die Brühkammer hinein Vorteile; solche Schwankungen können durch Verwendung unterschiedlicher Kaffeepulverqualitäten vorkommen.

**Patentansprüche**

1. Kolben-Zylinder-Aggregat an einer Maschine zur Zubereitung von Kaffee, mit einem zylindrischen Hohlraum (6) als Brühkammer, einem endseitig am zylindrischen Hohlraum (6) angeordneten, in Axialrichtung des zylindrischen Hohlraumes (6) starr gelagerten Schliessglied (10) und einem von der anderen Endseite des zylindrischen Hohlraumes (6) in diesen hineinbewegbaren und herausziehbaren Kolben (25), welcher mit einem Brühwasseranschluss (37) versehen ist und gegen das Innere des zylindrischen Hohlraumes führende Brühwasser-Auslasskanäle (38) besitzt, dadurch gekennzeichnet, dass zum Antrieb des in den zylindrischen Hohlraum (6) hineinbewegbaren und herausziehbaren Kolbens (25) ein Elektromotor (32) vorgesehen ist, der mit einem Steuerorgan in Wirkungsverbindung steht, an welches ein Druckmessorgan zur unmittelbaren Ermittlung des auf den Kolben (25) wirkenden Gegendrucks angeschlossen ist.

2. Kolben-Zylinder-Aggregat an einer Maschine zur Zubereitung von Kaffee, mit einem zylindrischen Hohlraum (6) als Brühkammer, einem endseitig am zylindrischen Hohlraum (6) angeordneten, in Axialrichtung des zylindrischen Hohlraumes (6) starr gelagerten Schliessglied (10) und einem von der anderen Endseite des zylindrischen Hohlraumes (6) in diesen hineinbewegbaren und herausziehbaren Kolben (25), welcher mit einem Brühwasseranschluss (37) versehen ist und gegen das Innere des zylindrischen Hohlraumes führende Brühwasser-Auslasskanäle (38) besitzt, dadurch gekennzeichnet, dass zum Antrieb des in den zylindrischen Hohlraum (6) hineinbewegbaren und herausziehbaren Kolbens (25) ein elektrischer Schrittmotor (32) vorgesehen ist, der mit einem Steuerorgan in Wirkungs-

7

verbindung steht.

3. Kolben-Zylinder-Aggregat nach einem der Patentansprüche 1 oder 2, dadurch gekennzeichnet, dass der Kolben (25) über einen Kugelspindelantrieb (27,30) mit dem Antriebsmotor (32) verbunden ist.

4. Kolben-Zylinder-Aggregat nach Patentanspruch 3, dadurch gekennzeichnet, dass der Kolben (25) über eine lösbare Kupplung (28) mit der Spindel (27) des Kugelspindelantriebs verbunden ist.

5. Kolben-Zylinder-Aggregat nach Patentanspruch 4, dadurch gekennzeichnet, dass die lösbare Kupplung (28) durch zwei im wesentlichen halbzylindrische Kupplungsschalen (28a,28b) gebildet ist, die einen Endbereich des Kolbens (25) und einen Endbereich der Spindel (27) formschlüssig umfassen und die durch ein elastisches Ringglied (29) zusammengehalten sind.

6. Kolben-Zylinder-Aggregat nach einem der vorhergehenden Patentansprüche, dadurch gekennzeichnet, dass das Schliessglied (10) durch ein plattenartiges Element gebildet ist, welches exzentrisch um eine zur Mittelachse des zylindrischen Hohlraumes (6) parallele, ausserhalb des Hohlraumes liegende Achse (12) drehbar gelagert und von einer ersten, den zylindrischen Hohlraum (6) verschliessende in eine zweite, den zylindrischen Hohlraum (6) öffnende Stellung verschwenkbar ist.

7. Kolben-Zylinder-Aggregat nach Patentanspruch 6, dadurch gekennzeichnet, dass zur Verschwenkung des Schliessgliedes (10) ein Schrittmotor (40) vorgesehen ist, der mit dem Steuergerät in Wirkungsverbindung steht.

8. Kolben-Zylinder-Aggregat nach Patentansprüchen 6 oder 7, dadurch gekennzeichnet, dass das Schliessglied (10) Arretiermittel (22,23) aufweist, die es in der genannten ersten Stellung gegen Verschiebung in Richtung des Verlaufs der Mittelachse des zylindrischen Hohlraumes (6) sichern.

9. Kolben-Zylinder-Aggregat nach einem der vorhergehenden Patentansprüche, dadurch gekennzeichnet, dass die, von der Verschlusstellung her gesehen, beim Ausschwenken nachlaufende Kante (47) des Schliessgliedes abgeschrägt ist und beim anschliessenden Wiedereinschwenken in die Verschlusstellung den ausgelaugten Kaffeepulverkuchen (48a) abstreift.

10. Verfahren zum Betrieb des Kolben-Zylinder-Aggregates nach einem der vorhergehenden Patentansprüche, bei welchem der Kolben (25) zur Freigabe der Brühkammer (6) zurückgezogen, Kaffeepulver (48) in die Brühkammer (6) eingefüllt und der Kolben (25) in die Brühkammer (6) hineinbewegt wird, dadurch gekennzeichnet, dass der Vorschub des Kolbens (25) in die Brühkammer (6) hinein in Abhängigkeit von der Menge des eingefüllten Kaffeepulvers (48) und in Abhängigkeit von der gewünschten Getränkequalität erfolgt.

11. Verfahren nach Anspruch 10, dadurch gekennzeichnet, dass der Kolben (25), nach erfolgtem Aufbrühen, vor der Verschwenkung des Schliessgliedes (10) in seine Offenstellung, um einen geringen Betrag zurückgezogen wird, um das Schliessglied (10) zu entlasten.

12. Verfahren nach einem der Ansprüche 10 oder 11, dadurch gekennzeichnet, dass der Kolben (25), nach Öffnung des Schliessgliedes (10), in seine in die Brühkammer (6) hineingefahrene Endstellung bewegt wird, um den Kaffeepulverkuchen (48a) aus der Kammer (6) herauszustossen, wobei der Kaffeepulverkuchen (48a) durch das Schliessglied (10), während seiner Bewegung in die Verschlusstellung, abgestreift wird.

## Claims

1. Piston-cylinder unit on a machine for the preparation of coffee, with a cylindrical cavity (6) as the infusion chamber, a closing member (10) arranged at the end face of the cylindrical cavity (6), mounted rigidly in the axial direction of the cylindrical cavity (6) and a piston (25) able to be moved into and withdrawn from the cylindrical cavity (6) from the other end face thereof, which piston is provided with an infusion water connection (37) and has infusion water outlet channels (38) leading towards the inside of the cylindrical cavity, characterised in that an electric motor (32) is provided for driving the piston (25) able to be moved into and withdrawn from the cylindrical cavity (6), which electric motor (32) is in operative connection with a control member, to which a pressure-measuring member for directly ascertaining the counter-pressure acting on the piston (25) is connected.

2. Piston-cylinder unit on a machine for the preparation of coffee, with a cylindrical cavity (6) as the infusion chamber, a closing member (10) arranged at the end face of the cylindrical cavity (6) and mounted rigidly in the axial direction of the cylindrical cavity (6), and a piston (25) able to be moved into and withdrawn from the cylindrical cavity (6), from the other end face thereof, which piston is provided with an infusion water connection (37) and has infusion water outlet channels (38) leading towards the inside of the cylindrical cavity, characterised in that an electrical stepping motor (32) is provided for driving the piston (25) which can be moved into and withdrawn from the cylindrical cavity (6), which stepping motor (32) is in operative connection with a control member.

3. Piston-cylinder unit according to one of Patent Claims 1 or 2, characterised in that the piston (25) is connected to the drive motor (32) by way of a ball spindle drive (27, 30).

4. Piston-cylinder unit according to Patent Claim, 3, characterised in that the piston (25) is connected to the spindle (27) of the ball spindle drive by way of a releasable coupling (28).

5. Piston-cylinder unit according to Patent Claim 4, characterised in that the releasable coupling (28) is formed by two substantially semi-cylindrical coupling shells (28a, 28b), which surround one end region of the piston (25) and one end region of the spindle (27) in a form-locking manner and which are held together by a resilient annular member (29).

6. Piston-cylinder unit according to one of the preceding Patent Claims, characterised in that the closing member (10) is formed by a plate-like member, which is mounted to rotate eccentrically about a shaft (12) located outside the cavity, parallel to the central axis of the cylindrical cavity and can be swung from a first position closing off the cylindrical cavity (6) into a second position opening the cylindrical cavity (6).

7. Piston-cylinder unit according to Patent Claim 6, characterised in that provided for swinging the closing member (10) is a stepping motor (40), which is in operative connection with the control device.

8. Piston-cylinder unit according to Patent Claims 6 or 7, characterised in that the closing member (10) comprises locking means (22, 23), which in the said first position prevent it from sliding in the direction in which the central axis of the cylindrical cavity (6) extends.

9. Piston-cylinder unit according to one of the preceding Patent Claims, characterised in that the trailing edge (47) of the closing member at the time of swinging-out, seen from the closed position, is bevelled and at the time of subsequent swinging-inwards once more into the closed position, wipes off the leached coffee powder cake (48a).

10. Method for the operation of the piston-cylinder unit according to one of the preceding Patent Claims, in which the piston (25) is retracted for opening the infusion chamber (6), coffee powder (48) is introduced into the infusion chamber (6) and the piston (25) is moved into the infusion chamber (6), characterised in that the advance of the piston (25) into the infusion chamber takes place depending on the quantity of coffee powder (48) introduced and depending on the desired quality of the drink.

11. Method according to Claim 10, characterised in that after the infusion has taken place, before the closing member (10) is swung into its open position, the piston (25) is drawn back by a small amount, in order to remove the load on the closing member (10).

12. Method according to one of Claims 10 or 11, characterised in that after opening the closing member (10), the piston (25) is moved into its end position introduced into the infusion chamber (6), in order to eject the coffee powder cake (48a) from the chamber (6), the coffee powder cake (48a) being scraped off by the closing member (10), during its movement into the closed position.

**Revendications**

9

1. Ensemble piston-cylindre faisant partie d'une machine de préparation de café, comprenant une cavité cylindrique (6), servant de chambre de percolation, un organe d'obturation (10), disposé du côté de l'une des extrémités de cette cavité cylindrique (6) et monté immobile suivant la direction axiale de celle-ci, et un piston (25) qui est agencé de façon à pouvoir être introduit dans la cavité cylindrique (6), et être extrait de celle-ci, du côté de son autre extrémité et qui est pourvu d'un raccord d'eau de percolation (37) et comporte des conduits de sortie d'eau de percolation (38) orientés vers l'intérieur de la cavité cylindrique, caractérisé en ce que, pour entraîner le piston (25) pouvant être introduit dans la cavité cylindrique (6) et en être extrait, il est prévu un moteur électrique (32) qui coopère avec un organe de commande auquel est raccordé un organe de mesure de pression servant à relever directement la contre-pression s'exerçant sur le piston (25).

2. Ensemble piston-cylindre faisant partie d'une machine de préparation de café, comprenant une cavité cylindrique (6), servant de chambre de percolation, un organe d'obturation (10), disposé du côté de l'une des extrémités de cette cavité cylindrique (6) et monté immobile suivant la direction axiale de celle-ci, et un piston (25) qui est agencé de façon à pouvoir être introduit dans la cavité cylindrique (6), et être extrait de celle-ci, du côté de son autre extrémité et qui est pourvu d'un raccord d'eau de percolation (37) et comporte des conduits de sortie d'eau de percolation (38) orientés vers l'intérieur de la cavité cylindrique, caractérisé en ce que, pour entraîner le piston (25) pouvant être introduit dans la cavité cylindrique (6) et en être extrait, il est prévu un moteur électrique pas à pas (32) qui coopère avec un organe de commande.

3. Ensemble piston-cylindre suivant l'une des revendications 1 et 2, caractérisé en ce que le piston (25) est relié au moteur d'entraînement (32) par l'intermédiaire d'un entraînement à vis à billes (27, 30).

4. Ensemble piston-cylindre suivant la revendication 3, caractérisé en ce que le piston (25) est relié à la vis (27) de l'entraînement à vis à billes par l'intermédiaire d'un accouplement démontable (28).

5. Ensemble piston-cylindre suivant la revendication 4, caractérisé en ce que l'accouplement démontable (28) est constitué de deux coquilles d'accouplement (28a, 28b), pratiquement semi-cylindriques, qui entourent, par complémentarité de formes, une zone extrême du piston (25) et une zone extrême de la tige (27) et qui sont maintenues assemblées par un organe annulaire élastique (29).

6. Ensemble piston-cylindre suivant l'une des revendications précédentes, caractérisé en ce que l'organe d'obturation (10) est constitué par un élément en forme de plaque qui est monté rotatif, d'une manière excentrée, autour d'un axe (12) qui est parallèle à l'axe de symétrie de la cavité cylindrique (6) et se trouve à l'extérieur de cette cavité, et en ce qu'il est agencé de façon à pouvoir pivoter d'une première position obturant la cavité cylindrique (6) à une seconde position libérant cette dernière.

7. Ensemble piston-cylindre suivant la revendication 6, caractérisé en ce que, pour le pivotement de l'organe d'obturation (10), il est prévu un moteur pas à pas (40) qui coopère avec l'appareil de commande.

8. Ensemble piston-cylindre suivant l'une des revendications 6 et 7, caractérisé en ce que l'organe d'obturation (10) comporte des moyens de butée (22, 23) qui l'immobilisent dans la première position indiquée en l'empêchant de se déplacer vers la position où il est aligné avec l'axe de symétrie de la cavité cylindrique (6).

9. Ensemble piston-cylindre suivant l'une des revendications précédentes, caractérisé en ce que l'arête (47) de l'organe d'obturation qui, vu à partir de la position d'obturation, se trouve en arrière lors du pivotement vers l'extérieur est chanfreinée et en ce que, lors du pivotement de retour dans la position d'obturation qui suit, cette arête (47) retire par raclage le gâteau de poudre de café (48a) ayant subi la percolation.

10. Procédé de mise en oeuvre de l'ensemble piston-cylindre suivant l'une des revendications précédentes, selon lequel le piston (25) est rétracté de façon à libérer la chambre de percolation (6), cette dernière est remplie de poudre de café (48) et le piston (25) y est enfoncé, caractérisé en ce que l'avance du piston (25) dans la chambre de percolation (6) s'effectue en fonction de la quantité de poudre de café (48) remplissant cette dernière et en fonction de la qualité voulue pour la boisson.

**11.** Procédé suivant la revendication 10, caractérisé en ce qu'une fois la percolation effectuée et avant le pivotement de l'organe d'obturation (10) dans sa position ouverte, le piston (25) est reculé sur une faible distance afin de supprimer l'effort s'exerçant sur cet organe d'obturation (10).

**12.** Procédé suivant l'une des revendications 10 et 11, caractérisé en ce qu'après ouverture de l'organe d'obturation (10), le piston (25) est déplacé dans la position extrême de son mouvement d'introduction dans la chambre de percolation (6), afin d'expulser le gâteau de poudre de café (48a) hors de cette chambre (6), de sorte que ce gâteau de poudre de café (48a) est retiré par raclage par l'organe d'obturation (10) pendant son déplacement vers sa position d'obturation.

FIG. 1

FIG. 2

FIG. 3

EP 0 237 475 B1

14

FIG. 4

## FIG. 6

## FIG. 5